# EUROPÄISCHE PATENTANMELDUNG

(11) **EP 4 249 846 A1**
(43) Veröffentlichungstag der Anmeldung: **27.09.2023**
(21) Anmeldenummer: 22163528.7
(22) Anmeldetag: 22.03.2022
(51) Int. Cl.: G01B 5/00, G01B 5/06

(54) **MESSVORRICHTUNG ZUR MESSUNG DER DICKE EINES VORZUGSWEISE METALLENEN BANDES UND MASCHINELLE ANORDNUNG ZUM UMFORMEN EINES PLASTISCH VERFORMBAREN UND VORZUGSWEISE METALLENEN BANDROHLINGS IN EIN BAND**

(71) Anmelder: FELSS Systems GmbH, 75203 Königsbach-Stein (DE)
(72) Erfinder: STEBLAU, Wiatscheslaw, 76287 Rheinstetten (DE); KASCHUBA, Michael, 75328 Schömberg (DE); BEIHOFER, Dennis, 75236 Kämpfelbach (DE)
(74) Vertreter: Kohler Schmid Möbus Patentanwälte

(57) **Zusammenfassung**

Messvorrichtung zur Messung der Dicke eines vorzugsweise metallenen Bandes und maschinelle Anordnung zum Umformen eines plastisch verformbaren und vorzugsweise metallenen Bandrohlings in ein Band

Eine Messvorrichtung (12) zur Messung der Dicke eines vorzugsweise metallenen Bandes (3) umfasst eine taktile Messeinheit (13), ein Gehäuse (14) für die taktile Messeinheit (13) mit einer Gehäusewand (27) und mit einem von der Gehäusewand (27) begrenzten Gehäuseinnenraum (26) sowie eine Klimatisierungsvorrichtung (25) zur Klimatisierung des Gehäuseinnenraums (26). Die Gehäusewand (27) ist an wenigstens einer Seite der taktilen Messeinheit (13) mit einer Wandöffnung (28) versehen, die zu einer Auflagefläche (18) einer Bandauflage der taktilen Messeinheit (13) hin mündet, derart, dass das durch die Wandöffnung (28) der Gehäusewand (27) in einer Bewegungsrichtung (8) in das Gehäuseinnere (26) eingeführte Band (3) mit einer Flachseite auf der Auflagefläche (18) der Bandauflage zu liegen kommt. Mittels der Klimatisierungsvorrichtung (25) ist die Temperatur in dem Gehäuseinnenraum (26) einstellbar.

Eine maschinelle Anordnung zum Umformen eines plastisch verformbaren und vorzugsweise metallenen Bandrohlings in ein Band umfasst eine Messvorrichtung (12) der vorgenannten Art.

## Beschreibung

Die Erfindung betrifft eine Messvorrichtung zur Messung der Dicke eines vorzugsweise metallenen Bandes mit zwei einander gegenüberliegenden Flachseiten,
- mit einer taktilen Messeinheit sowie mit einer Auswertevorrichtung, die mit der taktilen Messeinheit verbunden ist,
- wobei die taktile Messeinheit einen Messtaster, einen Lagerbügel mit einem vorkragenden Bügelschenkel und mit einer Bügelhauptebene sowie eine Bandauflage umfasst,
- wobei die Bandauflage an einer Auflagefläche der Bandauflage zur Lagerung des Bandes an einer der Auflagefläche zugewandten Flachseite des Bandes ausgebildet ist,
- wobei der Bügelschenkel des Lagerbügels der Bandauflage gegenüberliegt und mit dem Messtaster versehen ist,
- wobei der Messtaster relativ zu der Bandauflage beweglich gelagert und in eine Messposition zustellbar ist, in welcher der Messtaster bei auf der Auflagefläche der Bandauflage gelagertem Band mit einem bandauflageseitigen Tastende an die von der Auflagefläche der Bandauflage abliegende Flachseite des Bandes angelegt ist und
- wobei mittels der Auswertevorrichtung die Dicke des Bandes bestimmbar ist anhand der Lage des in die Messposition zugestellten Messtasters relativ zu dem den Messtaster lagernden Bügelschenkel des Lagerbügels und/oder relativ zu der Auflagefläche der Bandauflage.

Die Erfindung betrifft außerdem eine maschinelle Anordnung zum Umformen eines plastisch verformbaren und vorzugsweise metallenen Bandrohlings in ein Band mit zwei einander gegenüberliegenden Flachseiten, mit einer Umformvorrichtung, mit einer der Umformvorrichtung in einer Bewegungsrichtung des Bandes nachgeordneten Messvorrichtung sowie mit einer mit der Messvorrichtung verbundenen Steuerungsvorrichtung für die Umformvorrichtung,
- wobei die Umformvorrichtung ein Walzwerk mit Umformwalzen aufweist, die wenigstens einen Walzspalt ausbilden, durch welchen der Bandrohling unter Erzeugung des Bandes in Richtung auf die Messvorrichtung bewegbar ist und der eine Spaltweite aufweist, welche die Dicke des Bandes definiert,
- wobei mittels der Messvorrichtung die Dicke des an der Umformvorrichtung erzeugten Bandes messbar ist und
- wobei mittels der Steuerungsvorrichtung
   - ein an der Messvorrichtung gemessener Ist-Wert der Dicke des Bandes mit einem Soll-Wert der Dicke des Bandes vergleichbar ist und
   - im Falle einer Abweichung des Ist-Wertes der Dicke des Bandes von dem Soll-Wert die Spaltweite des Walzspalts der Umformwalzen des Walzwerks derart einstellbar ist, dass die Spaltweite des Walzspalts der Umformwalzen die Dicke des Bandes mit ihrem Soll-Wert definiert.

Eine gattungsgemäße maschinelle Anordnung offenbart DE 2 347 396 A, eine gattungsgemäße Messvorrichtung ist aus der betrieblichen Praxis bekannt.

Maschinelle Anordnungen der vorbekannten Art werden beispielsweise bei der Fertigung von dünnen Bändern zur Herstellung von Spiralfedern für mechanische Uhrwerke eingesetzt. Zur Gewährleistung der gewünschten Genauigkeit des betreffenden Uhrwerks darf sich die Dickentoleranz an dem zur Herstellung der Spiralfeder für das Uhrwerk verwendeten Band lediglich im Nanometerbereich bewegen. Entsprechend präzise ist die Spaltweite des oder der Walzspalte an dem Walzwerk der Umformvorrichtung einzustellen, mittels derer das Band aus einem als Bandrohling vorgesehenen Draht erzeugt wird. Die Einhaltung der erforderlichen Maßgenauigkeit wird durch eine mittels einer Messvorrichtung der vorbekannten Art durchgeführte Dickenmessung überwacht, die an dem die Umformvorrichtung durchlaufenden Band nach dem Verlassen der Umformvorrichtung durchgeführt wird. In Abhängigkeit von dem Ergebnis der Dickenmessung wird die Einstellung der Spaltweite des oder der Walzspalte an der Umformvorrichtung beibehalten oder entsprechend der festgestellten Maßabweichung verändert. Zur Einhaltung der maximalen Dickentoleranz an dem mittels der Umformvorrichtung gefertigten Band bedarf es einer hochpräzisen Messung der Dicke des Bandes nach dem Verlassen der Umformvorrichtung.

Eine hochgenaue Messvorrichtung und eine maschinelle Anordnung zur Herstellung eines Bandes mit einer Dickentoleranz in dem zulässigen Nanometerbereich bereitzustellen, ist Aufgabe der vorliegenden Erfindung.

Erfindungsgemäß gelöst wird diese Aufgabe durch die Messvorrichtung gemäß Patentanspruch 1 und durch die maschinelle Anordnung gemäß Patentanspruch 7.

Aufgrund der Anordnung in einem klimatisierten Gehäuse werden an der taktilen Messeinheit der erfindungsgemäßen Messvorrichtung insbesondere ein durch Temperaturschwankungen in der Umgebung der taktilen Messeinheit bedingter relevanter Verzug der mechanischen Komponenten der taktilen Messeinheit und daraus resultierende Schwankungen der Messergebnisse an der Messvorrichtung verhindert.

Bei der versuchsweisen Umsetzung der Erfindung bedurfte es bei einer Temperatur in dem Gehäuseinnern von 20° C einer Beschränkung der Temperaturschwankungen in der Umgebung der taktilen Messeinheit auf +-0,1° C, um die erforderliche Konstanz der Messergebnisse an der Messvorrichtung zu erzielen und dadurch die verlangte Maßhaltigkeit des mittels der Umformvorrichtung erzeugten Bandes zu gewährleisten.

Die an der erfindungsgemäßen Messvorrichtung vorgesehene Einhausung der taktilen Messeinheit ermöglicht es, die erforderliche Begrenzung der Temperaturschwankungen in der Umgebung der taktilen Messeinheit mit geringem Aufwand zu realisieren. Eine entsprechende Klimatisierung eines ganzen Produktionsraumes wäre technisch um ein Vielfaches aufwändiger und folglich nicht wirtschaftlich sinnvoll umsetzbar.

Durch eine Wandöffnung des Gehäuses wird das Band nach dem Verlassen der Umformvorrichtung auf die Auflagefläche der Bandauflage bewegt. Während des Messvorgangs befindet sich das Band vorzugsweise in Ruhe.

Erfindungsgemäß verarbeitet werden insbesondere Drähte aus Stahl, Kupfer und aus Speziallegierungen auf Kobaltbasis. Der Anfangsdurchmesser eines als Bandrohling vorgesehenen Drahtes an der Einlaufseite der Umformvorrichtung kann sich beispielsweise in dem Bereich von 0,05 mm bis 1,00 mm bewegen. Für das mittels der Umformvorrichtung der erfindungsgemäßen maschinellen Anordnung aus dem Bandrohling erzeugte dünne Band sind beispielsweise eine Breite von 0,05 bis 1,5 mm und eine Dicke von 10 bis 150 µm denkbar bei einer Dickentoleranz von vorzugsweise ±0,05 µm. Vorzugsweise liegt der Soll-Wert der Dicke des erfindungsgemäßen dünnen Bandes in einem Bereich von 30 µm bis 100 µm.

Anwendungsbeispiele für die Erfindung sind die Fertigung von dünnen Bändern zur Herstellung von Spiralfedern für mechanische Uhrwerke und die Fertigung von dünnen Bändern für elektronische Bauteile und/oder für die Supraleitung.

Besondere Ausführungsarten der erfindungsgemäßen Messvorrichtung und der erfindungsgemäßen maschinellen Anordnung ergeben sich aus den abhängigen Patentansprüchen 2 bis 6 und 8, 9.

In bevorzugter Ausgestaltung der erfindungsgemäßen Messvorrichtung ist der Lagerbügel der taktilen Messeinheit im Interesse einer besonderen Stabilität des Lagerbügels und einer damit verbundenen besonderen Messgenauigkeit C-förmig ausgebildet.

Ausweislich Patentanspruch 3 und Patentanspruch 8 kann in Weiterbildung der Erfindung das zu vermessende Band das Gehäuse der taktilen Messeinheit durchlaufen und folglich nach dem Verlassen der Umformvorrichtung der erfindungsgemäßen maschinellen Anordnung seinen Weg in der Bewegungsrichtung des Bandes fortsetzen.

Die erfindungsgemäße Messvorrichtung gemäß Patentanspruch 4 zeichnet sich durch eine funktionssichere Klimatisierungsvorrichtung zur präzisen Einstellung der Umgebungstemperatur der taktilen Messeinheit in dem Gehäuseinnern aus. Der Wärmetauscher wird vorzugsweise mit einer entsprechend temperierten Flüssigkeit beschickt.

Als Wärmetauscherbauart bevorzugt wird erfindungsgemäß ein Luft-Flüssigkeit-Wärmetauscher (Patentanspruch 5).

Im Falle der Erfindungsbauart gemäß Patentanspruch 6 ist der Innendruck in dem Gehäuseinnenraum des Gehäuses für die taktile Messeinheit höher als der Umgebungsdruck außerhalb des Gehäuses. Auf diese Weise wird das Einströmen von falsch temperierter Luft aus der Umgebung des Gehäuses in den Gehäuseinnenraum wirksam verhindert. Bei Einsatz eines Ventilators zum Belüften des Gehäuseinnern kann der Ventilator zur Erzeugung des Überdrucks in dem Gehäuseinnenraum genutzt werden.

In bevorzugter Ausgestaltung der erfindungsgemäßen maschinellen Anordnung ist ausweislich Patentanspruch 9 sowohl zur Klimatisierung des Gehäuseinnenraums des Gehäuses für die taktile Messeinheit als auch für das Walzwerk der Umformvorrichtung, vorzugsweise für die Lager der Umformwalzen, eine Flüssigkeitskühlung vorgesehen. Im Interesse einer einfachen und folglich besonders wirtschaftlich realisierbaren Konstruktion der erfindungsgemäßen maschinellen Anordnung sind der Wärmetauscher zur Klimatisierung des Gehäuseinnenraums des Gehäuses der taktilen Messeinheit und die Vorrichtung zur Kühlung der Umformvorrichtung, insbesondere ein hierfür vorgesehener Wärmetauscher, über eine gemeinsame Vorlaufleitung an ein gemeinsames Kühlaggregat angeschlossen, das seinerseits sowohl die Kühlflüssigkeit zur Klimatisierung des Gehäuseinnenraums des Gehäuses der taktilen Messeinheit als auch die Kühlflüssigkeit zur Kühlung der Umformvorrichtung bereitstellt.

Nachfolgend wird die Erfindung anhand beispielhafter schematischer Darstellungen näher erläutert.

Es zeigen:
- Figur 1: eine maschinelle Anordnung erster Bauart zum Umformen eines plastisch verformbaren metallenen Bandrohlings in ein dünnes Band,
- Figur 2: eine Messvorrichtung der maschinellen Anordnung gemäß Figur 1 mit einer in einem Gehäuse angeordneten taktilen Messeinheit und mit einer Klimatisierungsvorrichtung zur Klimatisierung des Gehäuseinnenraums,
- Figur 3: die taktile Messeinheit gemäß Figur 2 und
- Figur 4: eine maschinelle Anordnung zweiter Bauart zum Umformen eines plastisch verformbaren metallenen Bandrohlings in ein dünnes Band.

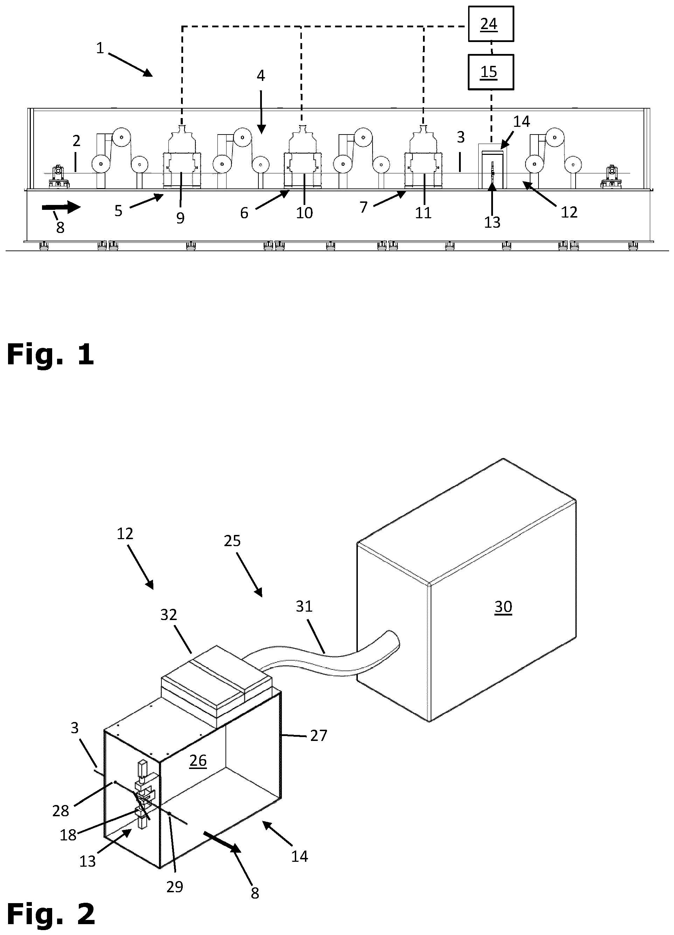

Gemäß Figur 1 wird an einer maschinellen Anordnung 1 ein Bandrohling in Form eines Drahtrohlings 2 in ein dünnes Band 3 umgeformt.

Der Drahtrohling 2 besteht in dem dargestellten Beispielsfall aus einer Speziallegierung auf Kobaltbasis. Alternativ kämen als Werkstoffe für den Drahtrohling 2 insbesondere auch Stahl und Kupfer in Frage. Aus dem Band 3 werden vorliegend Spiralfedern für mechanische Uhrwerke hergestellt. Zu diesem Zweck wird das mittels der maschinellen Anordnung 1 gefertigte Band 3 in dem weiteren Verlauf des Herstellungsprozesses in Bandabschnitte entsprechender Länge geteilt.

Als Umformvorrichtung ist im Falle der maschinellen Anordnung 1 ein herkömmliches Walzwerk 4 vorgesehen mit Walzgerüsten 5, 6, 7. Jedes der Walzgerüste 5, 6, 7 weist nicht im Einzelnen dargestellte Umformwalzen auf, die Walzspalte 9, 10, 11 ausbilden. Durch die Walzspalte 9, 10, 11 an den Walzgerüsten 5, 6, 7 wird der Drahtrohling 2 beziehungsweise das aus diesem erzeugte Zwischenprodukt in einer Bewegungsrichtung 8 bewegt, bis nach dem Durchlaufen des letzten Walzspalts 11 das Band 3 vorliegt.

Nachdem von der Qualität der aus dem Band 3 gefertigten Spiralfedern die Laufgenauigkeit der mit den Spiralfedern ausgestatteten Uhrwerke abhängt, muss bereits das Band 3 hohen Qualitätsansprüchen genügen. Insbesondere darf die Dicke des Bandes 3 nur innerhalb enger Grenzen von einem Soll-Wert abweichen. In dem vorliegenden Fall zulässig ist eine Dickentoleranz an dem Band 3 von +/- 0,05 µm bei einem Soll-Wert der Dicke des Bandes 3 in einem Bereich von 30 µm bis 100 µm, beispielsweise von 46 µm.

Ob das Band 3 nach dem Verlassen des Walzwerks 4 eine Dicke innerhalb der geforderten Dickentoleranz aufweist, wird mittels einer Messvorrichtung 12 geprüft, die in der Bewegungsrichtung 8 auf das Walzwerk 4 folgt.

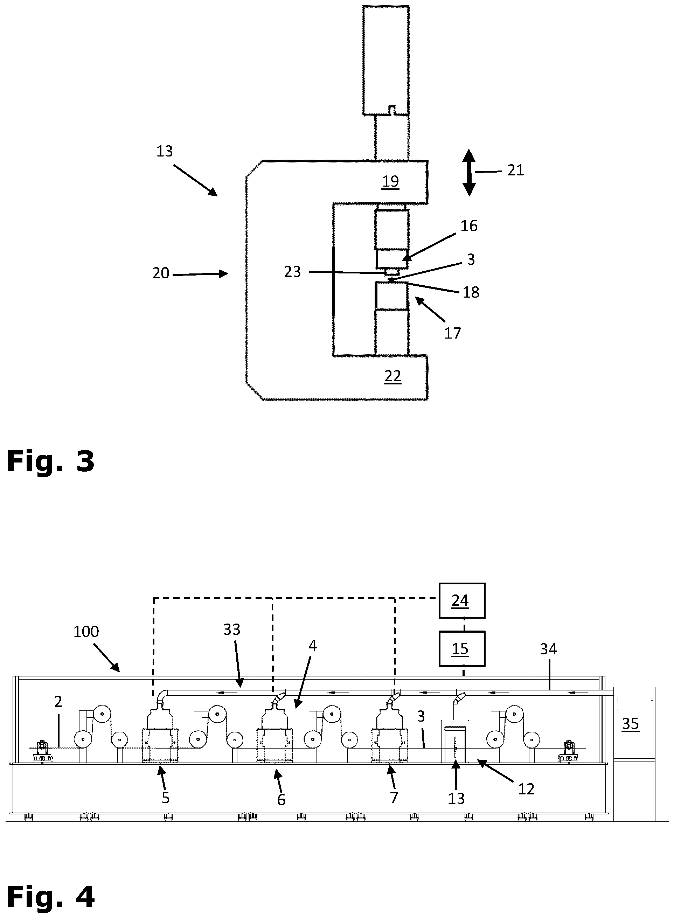

Die Messvorrichtung 12 umfasst eine in Figur 3 im Einzelnen dargestellte taktile Messeinheit 13, ein die taktile Messeinheit 13 aufnehmendes Gehäuse 14 sowie eine Auswertevorrichtung 15, die mit der taktilen Messeinheit 13 verbunden ist.

Die taktile Messeinheit 13 ist herkömmlicher Bauart. Ausweislich Figur 3 umfasst die taktile Messeinheit 13 einen Messtaster 16 sowie eine Bandauflage 17, die an einer Auflagefläche 18 das Band 3 an einer der Auflagefläche 18 zugewandten Flachseite des Bandes 3 lagert. Der Messtaster 16 ist an einem tasterseitigen Bügelschenkel 19 eines C-förmigen Lagerbügels 20 der taktilen Messeinheit 13 in vertikaler Richtung zustellbar gelagert (Doppelpfeil 21).

Die Bandauflage 17 ist in dem Schenkelzwischenraum zwischen dem tasterseitigen Bügelschenkel 19 und einem auflageseitigen Schenkel 22 des Lagerbügels 20 an dem auflageseitigen Schenkel 22 vorgesehen. Eine Bügelhauptebene des Lagerbügels 20 erstreckt sich parallel zu der Zeichenebene von Figur 3.

Zur Messung der Dicke des auf der Bandauflage 17 ruhenden Bandes 3 wird der Messtaster 16 in gewohnter Weise in vertikaler Richtung in eine Messposition zugestellt, in welcher der Messtaster 16 mit einem bandauflageseitigen Tastende 23 an die von der Auflagefläche 18 der Bandauflage 17 abliegende Flachseite des Bandes 3 angelegt ist. Mittels der Auswertevorrichtung 15 der Messvorrichtung 12 wird anhand der Lage des in die Messposition zugestellten Messtasters 16 relativ zu der Auflagefläche 18 der Bandauflage 17 die Dicke des Bandes 3 bestimmt.

Wie in Figur 1 stark schematisch dargestellt, ist die Auswertevorrichtung 15 der Messvorrichtung 12 mit einer Steuerungsvorrichtung 24 für das Walzwerk 4 verbunden.

In der Steuerungsvorrichtung 24 wird der mittels der taktilen Messeinheit 13 gemessene Ist-Wert der Dicke des Bandes 3 mit einem in der Steuerungsvorrichtung 24 hinterlegten Soll-Wert der Dicke des Bandes 3 verglichen. Im Falle einer Abweichung des Ist-Wertes der Dicke des Bandes 3 von dem Soll-Wert veranlasst die Steuerungsvorrichtung 24 durch entsprechende Ansteuerung von Stellmechanismen der Walzgerüste 5, 6, 7 eine Verstellung eines oder mehrerer der Walzspalte 9, 10, 11 derart, dass das Band 3 aufgrund der dann eingestellten Spaltweite(n) das Walzwerk 4 mit einer Dicke verlässt, die innerhalb der vorgegebenen Dickentoleranz liegt.

Nachdem der mittels der taktilen Messeinheit 13 gewonnene Messwert die Grundlage für die Einstellung der Spaltweite(n) des oder der Walzspalte 9, 10, 11 an dem Walzwerk 4 bildet und somit maßgebend ist für den Ist-Wert der Dicke des Bandes 3 nach dem Verlassen des Walzwerks 4, wird von der taktilen Messeinheit 13 eine konstant hohe Messgenauigkeit verlangt.

Um für eine konstante Messgenauigkeit schädliche Temperatureinflüsse auf die taktile Messeinheit 13 zu verhindern, weist die Messvorrichtung 12 für die taktile Messeinheit 13 das Gehäuse 14 sowie eine in Figur 2 gezeigte Klimatisierungsvorrichtung 25 zur Klimatisierung eines Gehäuseinnenraums 26 des Gehäuses 14 auf.

Wie im Einzelnen Figur 2 entnommen werden kann, wird die taktile Messeinheit 13 vollständig von einer Gehäusewand 27 des Gehäuses 14 umschlossen. Die Gehäusewand 27 besteht in dem dargestellten Beispielsfall aus transparentem Acrylglas.

Eine zu dem Walzwerk 4 hin liegende einlassseitige Wandöffnung 28 und eine auslassseitige Wandöffnung 29 der Gehäusewand 27 des Gehäuses 14 sind senkrecht zu der Bügelhauptebene des Lagerbügels 20 beidseits der taktilen Messeinheit 13 angeordnet und fluchten in der Bewegungsrichtung 8 des Bandes 3 miteinander und mit der Auflagefläche 18 an der Bandauflage 17 der taktilen Messeinheit 13.

Mittels der Klimatisierungsvorrichtung 25 wird die Temperatur in dem Gehäuseinnenraum 26 des Gehäuses 14 im Wesentlichen konstant auf 20° C gehalten. Aufgrund der Klimatisierung betragen Temperaturschwankungen in dem Gehäuseinnenraum 26 maximal +/- 0,1 °C. Infolge der konstanten Temperatur in der unmittelbaren Umgebung der taktilen Messeinheit 13 stellt sich bei den mit der taktilen Messeinheit 13 durchgeführten Dickenmessungen eine allenfalls minimale Maßdrift ein.

Die Klimatisierungsvorrichtung 25 umfasst ein Kühlaggregat 30, welches über eine in einem Leitungskanal 31 untergebrachte Vorlaufleitung eine Wärmetauschereinheit 32 mit Kühlflüssigkeit mit einer Temperatur von 20° C beschickt.

Die Wärmetauschereinheit 32 ist ebenfalls herkömmlicher Bauart und umfasst zusätzlich zu einem herkömmlichen Luft-Flüssigkeit-Wärmetauscher zwei Ventilatoren, mittels derer der Gehäuseinnenraum 26 des Gehäuses 14 mit Luft belüftet wird, deren Temperatur an dem Wärmetauscher auf 20° C eingestellt worden ist. Der Luft-Flüssigkeit-Wärmetauscher und die Ventilatoren sind in Figur 2 durch ein Gehäuse der Wärmetauschereinheit 32 verdeckt.

Im Inneren des Leitungskanals 31 verläuft auch eine Rücklaufleitung des Wärmetauschers der Wärmetauschereinheit 32, über welche die nach Passieren des Wärmetauschers erwärmte Kühlflüssigkeit zu dem Kühlaggregat 30 zurückgeführt wird.

Durch die mittels der Ventilatoren der Wärmetauschereinheit 32 bewirkte Luftzufuhr wird in dem Gehäuseinnenraum 26 des Gehäuses 14 ein Überdruck erzeugt. Unter der Wirkung des Überdrucks entweicht Luft aus dem Gehäuseinnenraum 26 durch die einlassseitige Wandöffnung 28 und die auslassseitige Wandöffnung 29. Mit Ausnahme der einlassseitigen Wandöffnung 28, der auslassseitigen Wandöffnung 29 und einer Belüftungsöffnung an der Wärmetauschereinheit 32 ist das Gehäuse 14 der taktilen Messeinheit 13 vollständig geschlossen.

Eine in Figur 4 dargestellte maschinelle Anordnung 100 unterscheidet sich von der maschinellen Anordnung gemäß den Figuren 1 bis 3 lediglich dadurch, dass die Wärmetauschereinheit 32 der Messvorrichtung 12 und eine Vorrichtung 33 zur Flüssigkeitskühlung des Walzwerks 4, im Einzelnen zur Flüssigkeitskühlung der Lager der Umformwalzen an den Walzgerüsten 5, 6, 7, über eine gemeinsame Vorlaufleitung 34 an ein gemeinsames Kühlaggregat 35 angeschlossen sind.

## Patentansprüche

1. Messvorrichtung zur Messung der Dicke eines vorzugsweise metallenen Bandes (3) mit zwei einander gegenüberliegenden Flachseiten,
• mit einer taktilen Messeinheit (13) sowie mit einer Auswertevorrichtung (15), die mit der taktilen Messeinheit (13) verbunden ist,
• wobei die taktile Messeinheit (13) einen Messtaster (16), einen Lagerbügel (20) mit einem vorkragenden Bügelschenkel (19) und mit einer Bügelhauptebene sowie eine Bandauflage (17) umfasst,
• wobei die Bandauflage (17) an einer Auflagefläche (18) der Bandauflage (17) zur Lagerung des Bandes (3) an einer der Auflagefläche (18) zugewandten Flachseite des Bandes (3) ausgebildet ist,
• wobei der Bügelschenkel (19) des Lagerbügels (20) der Bandauflage (17) gegenüberliegt und mit dem Messtaster (16) versehen ist,
• wobei der Messtaster (16) relativ zu der Bandauflage (17) beweglich gelagert und in eine Messposition zustellbar ist, in welcher der Messtaster (16) bei auf der Auflagefläche (18) der Bandauflage (17) gelagertem Band (3) mit einem bandauflageseitigen Tastende (23) an die von der Auflagefläche (18) der Bandauflage (17) abliegende Flachseite des Bandes (3) angelegt ist und
• wobei mittels der Auswertevorrichtung (15) die Dicke des Bandes (3) bestimmbar ist anhand der Lage des in die Messposition zugestellten Messtasters relativ zu dem den Messtaster (16) lagernden Bügelschenkel (19) des Lagerbügels (20) und/oder relativ zu der Auflagefläche (18) der Bandauflage (17),
**dadurch gekennzeichnet, dass**
die Messvorrichtung ein Gehäuse (14) für die taktile Messeinheit (13) mit einer Gehäusewand (27) und mit einem von der Gehäusewand (27) begrenzten Gehäuseinnenraum (26) sowie eine Klimatisierungsvorrichtung (25) zur Klimatisierung des Gehäuseinnenraums (26) aufweist,
• wobei die taktile Messeinheit (13) in dem Gehäuseinnenraum (26) angeordnet und von der Gehäusewand (27) umschlossen ist,
• wobei die Gehäusewand (27) senkrecht zu der Bügelhauptebene des Lagerbügels (20) der taktilen Messeinheit (13) wenigstens an einer Seite der taktilen Messeinheit (13) mit einer Wandöffnung (28, 29) versehen ist,
• wobei die Wandöffnung (28) der Gehäusewand (27) zu der Auflagefläche (18) der Bandauflage (17) der taktilen Messeinheit (13) hin mündet, derart, dass das durch die Wandöffnung (28, 29) der Gehäusewand (27) in einer Bewegungsrichtung (8) des Bandes (3) in das Gehäuseinnere (26) eingeführte Band (3) mit der betreffenden Flachseite auf der Auflagefläche (18) der Bandauflage (17) zu liegen kommt und
• wobei mittels der Klimatisierungsvorrichtung (25) die Temperatur in dem Gehäuseinnenraum (26) einstellbar ist.

2. Messvorrichtung nach Anspruch 1, **dadurch gekennzeichnet, dass** der Lagerbügel (20) der taktilen Messeinheit (13) als C-förmiger Lagerbügel ausgebildet ist,
• wobei der Bügelschenkel (19) als tasterseitiger Bügelschenkel (19) vorgesehen ist,
• wobei der C-förmige Lagerbügel (20) zusätzlich zu dem tasterseitigen Bügelschenkel (19) einen vorkragenden auflageseitigen Bügelschenkel (22) aufweist,
• wobei der tasterseitige Bügelschenkel (19) und der auflageseitige Bügelschenkel (22) unter Ausbildung eines Schenkelzwischenraums des Lagerbügels (20) voneinander beabstandet sind und
• wobei die Bandauflage (17) in dem Schenkelzwischenraum an dem auflageseitigen Bügelschenkel (22) vorgesehen ist.

3. Messvorrichtung nach einem der vorhergehenden Ansprüche, **dadurch gekennzeichnet,**
• **dass** die Gehäusewand (27) des Gehäuses (14) für die taktile Messeinheit (13) senkrecht zu der Bügelhauptebene des Lagerbügels (20) der taktilen Messeinheit (13) beidseits der taktilen Messeinheit (13) mit einer Wandöffnung (28, 29) versehen ist und
• **dass** die beiden Wandöffnungen (28, 29) der Gehäusewand (27) und die Auflagefläche (18) der Bandauflage (17) der taktilen Messeinheit (13) in der Bewegungsrichtung (8) des Bandes (3) miteinander fluchten.

4. Messvorrichtung nach einem der vorhergehenden Ansprüche, **dadurch gekennzeichnet, dass** die Klimatisierungsvorrichtung (25) der Messvorrichtung einen Ventilator sowie einen Wärmetauscher aufweist, wobei der Gehäuseinnenraum (26) des Gehäuses (14) für die taktile Messeinheit (13) mittels des Ventilators mit Luft belüftbar ist, deren Temperatur mittels des Wärmetauschers einstellbar ist.

5. Messvorrichtung nach Anspruch 4, **dadurch gekennzeichnet, dass** der Wärmetauscher als Luft-Flüssigkeit-Wärmetauscher ausgebildet ist.

6. Messvorrichtung nach einem der vorhergehenden Ansprüche, **dadurch gekennzeichnet, dass** der Innendruck in dem Gehäuseinnenraum (26) des Gehäuses (14) für die taktile Messeinheit (13) höher ist als der Umgebungsdruck außerhalb des Gehäuses (14).

7. Maschinelle Anordnung zum Umformen eines plastisch verformbaren und vorzugsweise metallenen Bandrohlings (2) in ein Band (3) mit zwei einander gegenüberliegenden Flachseiten, mit einer Umformvorrichtung (4), mit einer der Umformvorrichtung (4) in einer Bewegungsrichtung (8) des Bandes (3) nachgeordneten Messvorrichtung (12) sowie mit einer mit der Messvorrichtung (12) verbundenen Steuerungsvorrichtung (24) für die Umformvorrichtung (4),
• wobei die Umformvorrichtung (4) ein Walzwerk mit Umformwalzen aufweist, die wenigstens einen Walzspalt (9, 10, 11) ausbilden, durch welchen der Bandrohling (2) unter Erzeugung des Bandes (3) in Richtung auf die Messvorrichtung (12) bewegbar ist und der eine Spaltweite aufweist, welche die Dicke des Bandes (3) definiert,
• wobei mittels der Messvorrichtung (12) die Dicke des an der Umformvorrichtung (4) erzeugten Bandes (3) messbar ist und
• wobei mittels der Steuerungsvorrichtung (24)
- ein an der Messvorrichtung (12) gemessener Ist-Wert der Dicke des Bandes (3) mit einem Soll-Wert der Dicke des Bandes (3) vergleichbar ist und
- im Falle einer Abweichung des Ist-Wertes der Dicke des Bandes (3) von dem Soll-Wert die Spaltweite des Walzspalts (9, 10, 11) der Umformwalzen des Walzwerks derart einstellbar ist, dass die Spaltweite des Walzspalts (9, 10, 11) der Umformwalzen die Dicke des Bandes (3) mit ihrem Soll-Wert definiert,
**dadurch gekennzeichnet, dass**
als Messvorrichtung (12) die Messvorrichtung (12) nach einem der vorhergehenden Ansprüche vorgesehen ist,
• wobei die Wandöffnung (28) oder eine der beiden Wandöffnungen (28, 29) der Gehäusewand (27) des Gehäuses (14) für die taktile Messeinheit (13) als einlassseitige Wandöffnung (28) vorgesehen ist, indem sie der Umformvorrichtung (4) in der Bewegungsrichtung (8) des Bandes (3) nachgeordnet ist und
• wobei das an der Umformvorrichtung (4) erzeugte Band (3) durch die einlassseitige Wandöffnung (28) des Gehäuses (14) für die taktile Messeinheit (13) in der Bewegungsrichtung (8) des Bandes (3) auf die Auflagefläche (18) der Bandauflage (17) der taktilen Messeinheit (13) bewegbar ist.

8. Maschinelle Anordnung nach Anspruch 7 mit einer Messvorrichtung (12) nach Anspruch 3, **dadurch gekennzeichnet, dass** eine der beiden Wandöffnungen (28, 29) der Gehäusewand (27) des Gehäuses (14) für die taktile Messeinheit (13) die einlassseitige Wandöffnung (28) und die andere der beiden Wandöffnungen (28, 29) eine auslassseitige Wandöffnung (29) ausbildet, welche der Bandauflage (17) der taktilen Messeinheit (13) in der Bewegungsrichtung (8) des Bandes (3) nachgeordnet ist.

9. Maschinelle Anordnung nach Anspruch 7 mit einer Messvorrichtung (12) nach Anspruch 4, **dadurch gekennzeichnet,**
• **dass** der Wärmetauscher der Messvorrichtung (12) über eine Kühlflüssigkeit führende Vorlaufleitung (34) an ein Kühlaggregat (35) zur Bereitstellung von Kühlflüssigkeit angeschlossen ist,
• **dass** für das Walzwerk der Umformvorrichtung (4), vorzugsweise für Lager der Umformwalzen, eine Vorrichtung (33) zur Flüssigkeitskühlung vorgesehen ist, die über eine Kühlflüssigkeit führende Vorlaufleitung (34) an ein Kühlaggregat (35) zur Bereitstellung von Kühlflüssigkeit angeschlossen ist und
• **dass** die Vorlaufleitung (34) des Wärmetauschers der Messvorrichtung (12) und die Vorlaufleitung (34) der Vorrichtung (33) zur Flüssigkeitskühlung des Walzwerks der Umformvorrichtung (4) eine gemeinsame Vorlaufleitung (34) ausbilden, über welche der Wärmetauscher der Messvorrichtung (12) und die Vorrichtung (33) zur Flüssigkeitskühlung des Walzwerks der Umformvorrichtung (4) an ein gemeinsames Kühlaggregat (35) angeschlossen sind.
